(19)

Europäisches Patentamt
European Patent Office
Office européen des brevets

(11) **EP 4 318 786 A1**

(12) **EUROPEAN PATENT APPLICATION**

(43) Date of publication:
**07.02.2024 Bulletin 2024/06**

(51) International Patent Classification (IPC):
*H01M 50/534* (2021.01)

(21) Application number: **23188932.0**

(52) Cooperative Patent Classification (CPC):
**H01M 50/534**

(22) Date of filing: **01.08.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.08.2022 CN 202210918845**

(71) Applicant: **Ningde Amperex Technology Limited Zhangwan Town, Jiaocheng District Ningde City Fujian 352100 (CN)**

(72) Inventors:
• **KE, Zhaoqing**
  **Ningde City, 352100 (CN)**
• **WEN, Zhaodong**
  **Ningde City, 352100 (CN)**

(74) Representative: **Icosa**
  **83 avenue Denfert-Rochereau**
  **75014 Paris (FR)**

(54) **ELECTRODE ASSEMBLY AND ELECTROCHEMICAL APPARATUS**

(57) An electrode assembly includes an electrode plate and a tab disposed on the electrode plate, where the tab includes a metal strip and a tab adhesive provided on the metal strip, and along a thickness direction of the tab, the tab adhesive includes a first adhesive layer provided on the metal strip and a second adhesive layer provided on the first adhesive layer, where a projection area of the first adhesive layer along the thickness direction of the tab is greater than a projection area of the second adhesive layer along the thickness direction of the tab.

EP 4 318 786 A1

**Description**

**FIELD**

This application relates to the field of energy storage and specifically to an electrode assembly, an electrochemical apparatus, and an electronic apparatus.

**BACKGROUND**

A tab of a secondary battery is typically formed by a metal strip and a tab adhesive. A material of a conventional tab adhesive is hard, which is not conducive to deformation of the tab at a position with the tab adhesive. During mechanical vibrations such as dropping, an electrode assembly moves inside a packaging bag, causing repeated stretching and bending of the metal strip of the tab. The hard tab adhesive further restricts a position where the metal strip of the tab is stretched and bent. A bent position is likely to appear near a lower edge of the tab adhesive, leading to stress concentration at this position and fatigue of the metal strip, which ultimately results in fracture of the metal strip at this position.

**SUMMARY**

This application provides an electrode assembly, an electrochemical apparatus, and an electronic apparatus, so as to solve the problem of partial fracture of a tab inside a packaging film during mechanical movements such as dropping.

According to a first aspect, this application provides an electrode assembly. The electrode assembly includes an electrode plate and a tab disposed on the electrode plate, where the tab includes a metal strip and a tab adhesive provided on the metal strip, and along a thickness direction of the tab, the tab adhesive includes a first adhesive layer provided on the metal strip and a second adhesive layer provided on the first adhesive layer, where a projection area A1 of the first adhesive layer along the thickness direction of the tab is greater than a projection area A2 of the second adhesive layer along the thickness direction of the tab.

In this application, the multi-layer tab adhesive is provided on the metal strip, and the projection area of the first adhesive layer closer to the metal strip along the thickness direction of the tab is greater than the projection area of the second adhesive layer along the thickness direction of the tab, so that during top sealing of the electrode assembly, adhesive overflow from the second adhesive layer falls onto the first adhesive layer rather than directly onto the metal strip, conducive to alleviating stress concentration at an interface between the metal strip and tab adhesive of the tab during mechanical vibrations such as dropping of the electrode assembly, and thereby alleviating fracture of the tab.

According to some embodiments of this application, A1 is greater than A2, and $8\% \leq (A1 - A2)/A2 \leq 50\%$.

According to some embodiments of this application, with such arrangement of the first adhesive layer and the second adhesive layer, the projection area A2 of the second adhesive layer along the thickness direction of the tab completely falls within a range of the projection area A1 of the first adhesive layer along the thickness direction of the tab.

According to some embodiments of this application, $16\% \leq (A1 - A2)/A2 \leq 38\%$, and particularly, $22\% \leq (A1 - A2)/A2 \leq 30\%$.

According to some embodiments of this application, A1 ranges from 14 mm$^2$ to 64 mm$^2$, and A2 ranges from 10 mm$^2$ to 56 mm$^2$.

According to some embodiments of this application, width of the first adhesive layer is greater than width of the second adhesive layer. The width of the first adhesive layer closer to the metal strip being greater than the width of the second adhesive layer is conducive to alleviating stress concentration at the interface between the metal strip and tab adhesive of the tab during mechanical vibrations such as dropping, thereby alleviating the fracture of the tab.

According to some preferred embodiments of this application, the width W1 of the first adhesive layer is greater than the width W2 of the second adhesive layer.

According to some embodiments of this application, length of the first adhesive layer is greater than length of the second adhesive layer. The length of the first adhesive layer closer to the metal strip being greater than the length of the second adhesive layer is conducive to alleviating stress concentration at the interface between the metal strip and tab adhesive of the tab during mechanical vibrations such as dropping of the electrode assembly, thereby alleviating the fracture of the tab.

According to some preferred embodiments of this application, the length L1 of the first adhesive layer is greater than the length L2 of the second adhesive layer.

According to some preferred embodiments of this application, the length L1 of the first adhesive layer ranges from 4 mm to 8 mm.

According to some embodiments of this application, the width of the first adhesive layer ranges from 3.5 mm to 8 mm. According to some embodiments of this application, the width of the second adhesive layer ranges from 2.5 mm to 7 mm. When width of the tab adhesive is excessively small, the packaging reliability of the tab cannot be guaranteed. Decreased width of the tab adhesive leads to decreased adhesion area between the tab adhesive and an outer packaging bag. When the adhesion area is excessively small, an adhesion force between the tab adhesive and the outer packaging bag is smaller than an external pulling force, resulting in adhesion failure of the tab. When the width of the tab adhesive increases, stress at an edge of the tab adhesive increases, so that stress applied to the metal strip increases, making the tab prone to fracture. In addition, excessively wide tab adhesive also leads to increased length of the tab, increased total length of the electrode assembly, and decreased volumetric energy density.

According to some embodiments of this application, thickness of the first adhesive layer is less than thickness of the second adhesive layer. The thickness of the first adhesive layer closer to the metal strip being greater than the thickness of the second adhesive layer is conducive to alleviating stress concentration at the interface between the metal strip and tab adhesive of the tab during mechanical vibrations such as dropping of the electrode assembly, thereby alleviating the fracture of the tab.

According to some embodiments of this application, the thickness of the first adhesive layer is 10 $\mu$m to 55 $\mu$m. When the thickness of the first adhesive layer is less than 10 $\mu$m, a buffering effect on a stress-strain difference between the second adhesive layer and the metal strip is limited, so the fracture of the tab cannot be significantly alleviated. When the thickness of the first adhesive layer is greater than 55 $\mu$m, and the thickness of the first adhesive layer is greater than the thickness of the second adhesive layer, excessive adhesive overflow occurs at a contact edge between the tab adhesive layer and the metal strip, leading to poor stress tolerance at the edge. Therefore, increased stress leads to cracks, making the tab prone to fracture.

According to some embodiments of this application, the thickness of the second adhesive layer is 20 $\mu$m to 100 $\mu$m. The second adhesive layer is mainly used to form adhesion with the outer packaging bag. When the thickness of the second adhesive layer is less than 20 $\mu$m, the packaging reliability of the tab cannot be guaranteed. Under an external force, the second adhesive layer is easily pulled to fail in adhesion with the outer packaging bag, resulting in adhesion failure of the tab, thereby resulting in a dangerous accident of leakage of the electrode assembly. When the thickness of the second adhesive layer is greater than 100 $\mu$m, excessive adhesive overflow occurs on the second adhesive layer, and the adhesive overflow cannot be controlled only on the first adhesive layer. When the adhesive overflow from the second adhesive layer falls onto the metal strip, a hardness difference between the second adhesive layer and the metal strip leads to stress concentration at an interface therebetween, thereby resulting in the fracture of the tab.

According to some embodiments of this application, elongation at break of the first adhesive layer is greater than elongation at break of the second adhesive layer. The elongation at break of the first adhesive layer closer to the metal strip being greater than the elongation at break of the second adhesive layer is conducive to alleviating stress concentration at the interface between the metal strip and tab adhesive of the tab during mechanical vibrations such as dropping of the electrode assembly, thereby alleviating the fracture of the tab. According to some embodiments of this application, the elongation at break of the first adhesive layer is greater than or equal to 300%. According to some embodiments of this application, the elongation at break of the first adhesive layer is greater than or equal to 400%. According to some embodiments of this application, the elongation at break of the first adhesive layer is greater than or equal to 500%.

According to some preferred embodiments of this application, the elongation at break $\varepsilon 1$ of the first adhesive layer is $\varepsilon 1$, the elongation at break of the second adhesive layer is $\varepsilon 2$, $\varepsilon 1$ is greater than $\varepsilon 2$.

According to some preferred embodiments of this application, $0.19\% \leq (\varepsilon 1 - \varepsilon 2)/\varepsilon 2 \leq 4.30\%$.

According to some preferred embodiments of this application, $0.34\% \leq (\varepsilon 1 - \varepsilon 2)/\varepsilon 2 \leq 1.14\%$.

According to some embodiments of this application, the first adhesive layer includes polyethylene (PE). According to some embodiments of this application, the second adhesive layer includes polypropylene (PP).

According to some embodiments of this application, the first adhesive layer further includes polypropylene, and a mass percentage of polypropylene in the first adhesive layer is not greater than 80%.

According to some embodiments of this application, the second adhesive layer further includes polyethylene, and a mass percentage of polyethylene in the second adhesive layer is not greater than 90%. Higher percentage of PE in an adhesive layer leads to higher elongation at break and softer adhesive layer.

According to some embodiments of this application, a third adhesive layer is provided on the second adhesive layer. According to some embodiments of this application, the third adhesive layer satisfies at least one of the following conditions (A) to (C): (A) a projection area A3 of the third adhesive layer along the thickness direction of the tab is smaller than the projection area A2 of the second adhesive layer along the thickness direction of the tab; (B) thickness T3 of the third adhesive layer is less than the thickness T2 of the second adhesive layer; or (C) elongation at break $\varepsilon 3$ of the third adhesive layer is less than the elongation at break $\varepsilon 2$ of the second adhesive layer.

According to a second aspect of this application, this application provides an electrochemical apparatus including the electrode assembly according to the first aspect of this application.

According to a third aspect of this application, this application provides an electronic apparatus including the electrochemical apparatus according to the second aspect of this application.

In the electrode assembly provided in this application, the multi-layer tab adhesive is provided on the metal strip, and the projection area of the first adhesive layer closer to the metal strip along the thickness direction of the tab is greater than the projection area of the second adhesive layer along the thickness direction of the tab, so that during top sealing of the electrode assembly, adhesive overflow from the second adhesive layer falls onto the first adhesive layer rather than directly onto the metal strip, conducive to alleviating stress concentration at the interface between the metal strip and tab adhesive of the tab during mechanical vibrations such as dropping of the electrode assembly, and thereby alleviating the fracture of the tab.

## BRIEF DESCRIPTION OF DRAWINGS

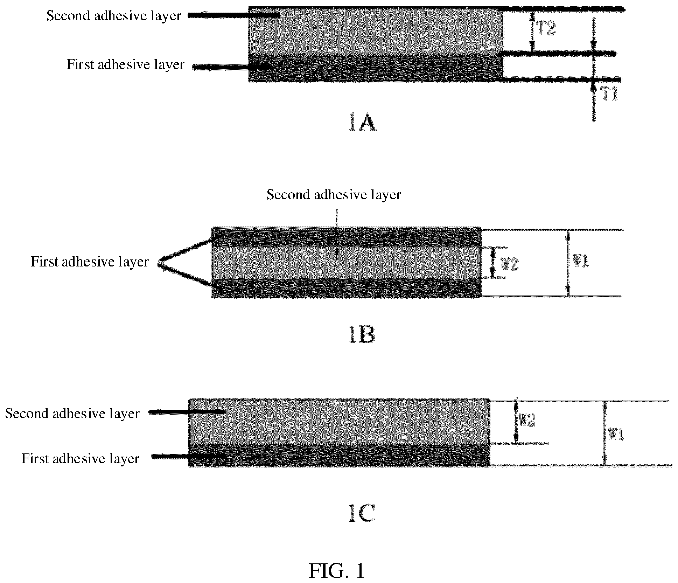

FIG. 1 is a schematic structural diagram of a tab adhesive (with two adhesive layers) in an electrode assembly according to some embodiments of this application. FIG. 1A is a side view showing different thicknesses of upper and lower tab adhesive layers, where thickness of a first adhesive layer is T1, and thickness of a second adhesive layer is T2. FIG. 1B and FIG. 1C are top views showing different widths of the upper and lower tab adhesive layers, where width W1 of the lower first adhesive layer is greater than width W2 of the upper second adhesive layer. FIG. 1B is top view 1 showing that the second adhesive layer is located in the middle of the first adhesive layer in a width direction. FIG. 1C is top view 2 showing that a long side of the second adhesive layer is aligned with a long side of the first adhesive layer.

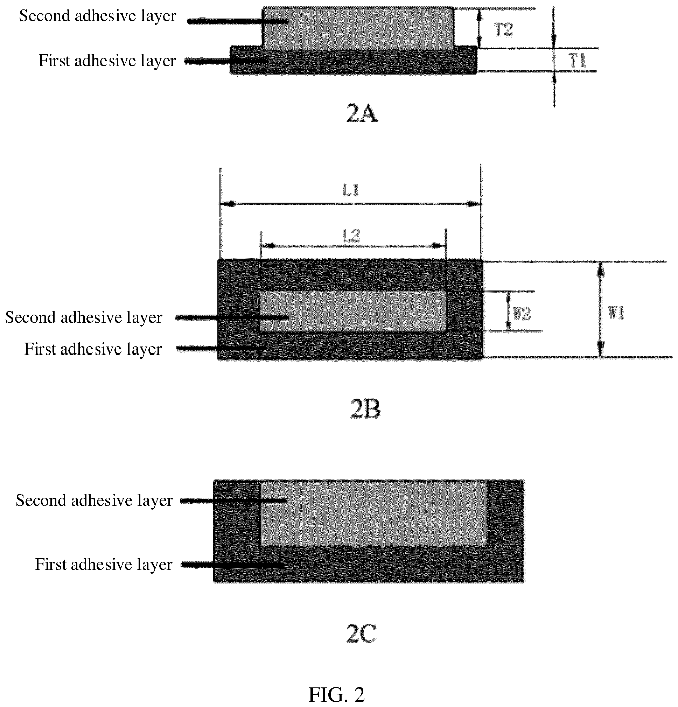

FIG. 2 is a schematic structural diagram of a tab adhesive (with two adhesive layers) in an electrode assembly according to some embodiments of this application. FIG. 2A is a side view showing different thicknesses of upper and lower tab adhesive layers, where thickness of a first adhesive layer is T1, and thickness of a second adhesive layer is T2. FIG. 2B and FIG. 2C are top views showing different lengths and widths of the upper and lower tab adhesive layers, where the length L1 and width W1 of the lower first adhesive layer are greater than the length L2 and width W2 of the upper second adhesive layer respectively. FIG. 2B is top view 1 showing that the second adhesive layer is located in the middle of the first adhesive layer in both length and width directions. FIG. 2C is top view 2 showing that the second adhesive layer is located in the middle of the first adhesive layer in a length direction, where a long side of the second adhesive layer is aligned with a long side of the first adhesive layer.

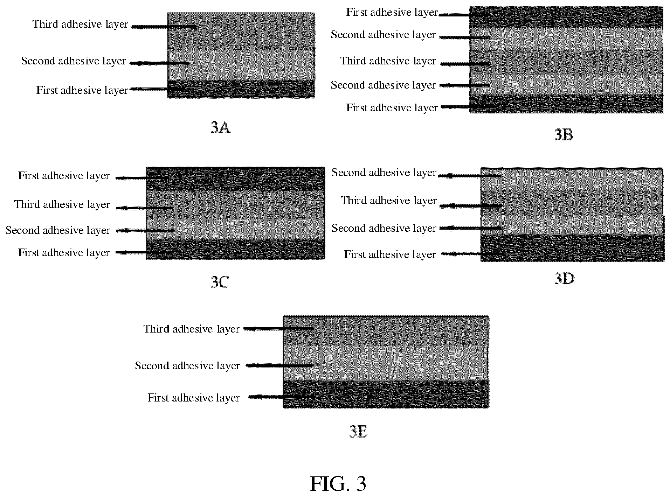

FIG. 3 is a schematic structural diagram of a tab adhesive (with three adhesive layers) in an electrode assembly according to some embodiments of this application. FIG. 3A is a side view showing that upper, middle, and lower tab adhesive layers are the same in length. FIG. 3B to FIG. 3E are top views showing that the upper, middle, and lower tab adhesive layers are different in width, where the width of the lower first adhesive layer is greater than the width of the middle second adhesive layer, and the width of the middle second adhesive layer is greater than the width of the upper third adhesive layer. FIG. 3B is top view 1 showing that the second adhesive layer is located in the middle of the first adhesive layer in a width direction, and the third adhesive layer is located in the middle of the second adhesive layer in a width direction. FIG. 3C is top view 2 showing that the second adhesive layer is located in the middle of the first adhesive layer in a width direction, where a long side of the third adhesive layer is aligned with a long side of the second adhesive layer. FIG. 3D is top view 3 showing that a long side of the first adhesive layer is aligned with a long side of the second adhesive layer, where the third adhesive layer is located in the middle of the second adhesive layer in a width direction. FIG. 3E is top view 4 showing that the three adhesive layers are aligned with each other on a long side.

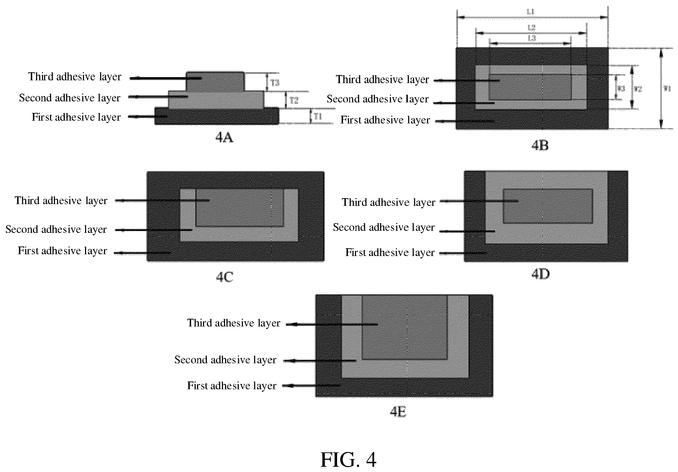

FIG. 4 is a schematic structural diagram of a tab adhesive (with three adhesive layers) in an electrode assembly according to some embodiments of this application. FIG. 4A is a side view showing that upper, middle, and lower tab adhesive layers are different in thickness, where thickness of a first adhesive layer is T1, thickness of a second adhesive layer is T2, and thickness of a third adhesive layer is T3. FIG. 4B to FIG. 4E are top views showing that the upper, middle, and lower tab adhesive layers are different in length/width, where the length L1/width W1 of the lower first adhesive layer is greater than the length L2/width W2 of the middle second adhesive layer, and the length L2/width W2 of the middle second adhesive layer is greater than the length L3/width W3 of the upper third adhesive layer. FIG. 4B is top view 1 showing that the second adhesive layer is located in the middle of the first adhesive layer in a length/width direction, and the third adhesive layer is located in the middle of the second adhesive layer in a length/width direction. FIG. 4C is top view 2 showing that the second adhesive layer is located in the middle of the first adhesive layer in a length/width direction, and the third adhesive layer is located in the middle of the second adhesive layer in a length direction and has a long side aligned with a long side of the second adhesive layer. FIG. 4D is top view 3 showing that the first adhesive layer is located in the middle of the second adhesive layer in a length direction and has a long side aligned with a long side of the second adhesive layer, and the third adhesive layer is located in the middle of the second adhesive layer in a length/width direction. FIG. 4E is top view 4 showing that the second adhesive layer is located in the middle of the first adhesive layer in a length direction, the third adhesive layer is located in the middle of the second adhesive layer in a length direction, and the three adhesive layers are aligned with each other on a long side.

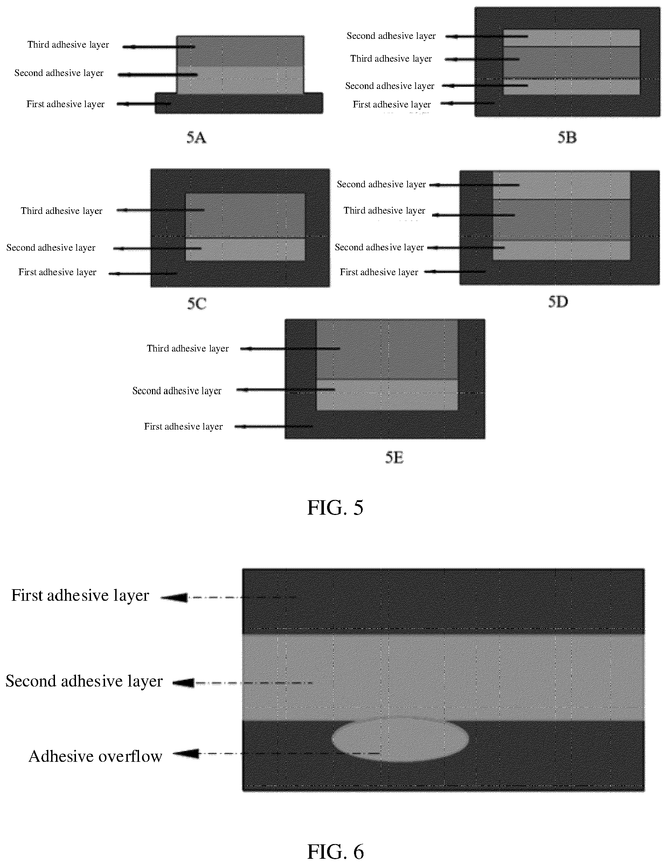

FIG. 5 is a schematic structural diagram of a tab adhesive (with three adhesive layers) in an electrode assembly according to some embodiments of this application. FIG. 5A is a side view showing that a first adhesive layer and a second adhesive layer are different in length and the second adhesive layer and a third adhesive layer are the same in length, where the length of the first adhesive layer is greater than the lengths of the second and third adhesive layers. FIG. 5B to FIG. 5E are top views showing that upper, middle, and lower tab adhesive layers are different in width, where the width of the first adhesive layer is greater than width of the second adhesive layer, and the width of the second adhesive layer is greater than width of the third adhesive layer. FIG. 5B is top view 1 showing that the second adhesive layer is located in the middle of the first adhesive layer in a length/width direction, and the third adhesive layer is located in the middle of the second adhesive layer in a width direction. FIG. 5C is top view 2 showing that the second adhesive layer is located in the middle of the first adhesive layer in a length/width direction, where a long side of the third adhesive layer is aligned with a long side of the second adhesive layer. FIG. 5D is top view 3 showing that the second adhesive layer is located in the middle of the first adhesive layer in a length direction, and the third adhesive layer is located in the middle of the second adhesive layer in a length/width direction. FIG. 5E is top view 4 showing that the second and third adhesive layers are located in the middle of the first adhesive layer in the length direction, and the three adhesive layers are aligned with each other on a long side.

FIG. 6 is a schematic diagram showing adhesive overflow from a tab adhesive (with two adhesive layers) during packaging of an electrode assembly according to some embodiments of this application.

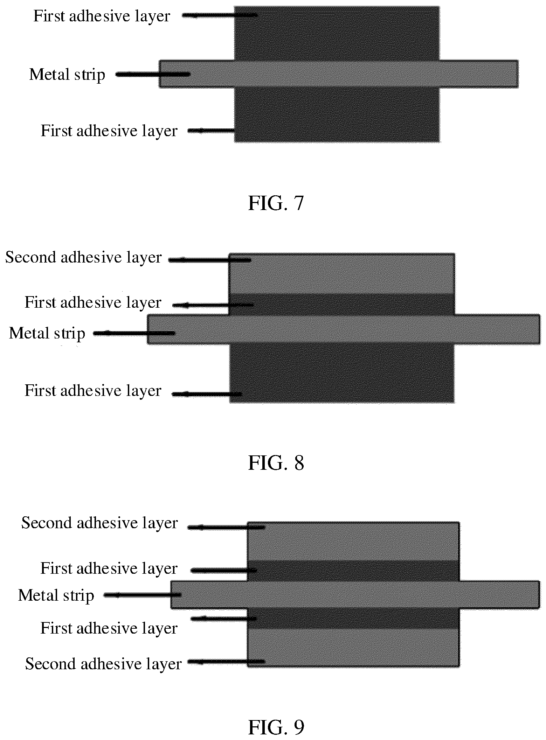

FIG. 7 is a schematic structural diagram of a metal strip 1 with a tab adhesive in an electrode assembly of comparative example 1, where only a single-layer tab adhesive is adhered to both upper and lower sides of the metal strip.

FIG. 8 is a schematic structural diagram of a metal strip with a tab adhesive in an electrode assembly of example 1, where a single-layer tab adhesive is still adhered to one side of the metal strip, while a double-layer tab adhesive is adhered to the other side of the metal strip.

FIG. 9 is a schematic structural diagram of a metal strip with a tab adhesive in an electrode assembly of example 2, where a double-layer tab adhesive is adhered to both upper and lower sides of the metal strip.

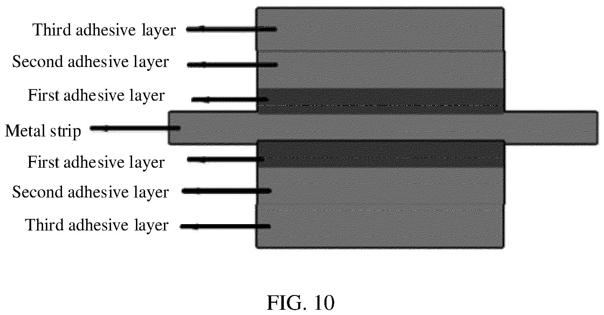

FIG. 10 is a schematic structural diagram of a metal strip with a tab adhesive in an electrode assembly of example 3, where a three-layer tab adhesive is adhered to both upper and lower sides of the metal strip.

## DESCRIPTION OF EMBODIMENTS

To make the objectives, technical solutions, and advantages of this application clearer, the following clearly and completely describes the technical solutions in this application with reference to some embodiments. Apparently, the described embodiments are some but not all embodiments of this application. Some relevant embodiments described herein are illustrative and used to provide a basic understanding of this application. Some embodiments of this application should not be construed as limitations on this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

In the description of this specification, "more than" or "less than" is inclusive of the present number, unless otherwise specified.

Unless otherwise specified, the terms used in this application have well known meanings as commonly understood by persons skilled in the art. Unless otherwise specified, numerical values of parameters mentioned in this application may be measured by using various measurement methods commonly used in the art (for example, they may be tested by using the methods provided in the embodiments of this application).

A list of items connected by the terms "at least one of", "at least one piece of", "at least one kind of", or the like may mean any combination of the listed items. For example, if items A and B are listed, the phrase "at least one of A or B" means only A; only B; or A and B. In another example, if items A, B, and C are listed, the phrase "at least one of A, B, or C" means only A, only B, only C, A and B (excluding C), A and C (excluding B), B and C (excluding A), or all of A, B, and C. The item A may contain a single constituent or a plurality of constituents. The item B may contain a single constituent or a plurality of constituents. The item C may contain a single constituent or a plurality of constituents.

Electrode assembly

According to a first aspect, this application provides an electrode assembly. The electrode assembly includes an electrode plate and a tab disposed on the electrode plate, where the tab includes a metal strip and a tab adhesive provided on the metal strip, and along a thickness direction of the tab, the tab adhesive includes a first adhesive layer provided on the metal strip and a second adhesive layer provided on the first adhesive layer, where a projection area of the first adhesive layer along the thickness direction of the tab is greater than a projection area of the second adhesive layer along the thickness direction of the tab.

In this application, the multi-layer tab adhesive is provided on the metal strip, and the projection area of the first adhesive layer closer to the metal strip along the thickness direction of the tab is greater than the projection area of the second adhesive layer along the thickness direction of the tab, so that during top sealing of the electrode assembly, adhesive overflow from the second adhesive layer falls onto the first adhesive layer rather than directly onto the metal strip, conducive to alleviating stress concentration at an interface between the metal strip and tab adhesive of the tab during mechanical vibrations such as dropping of the electrode assembly, and thereby alleviating fracture of the tab.

According to some embodiments of this application, width of the first adhesive layer is greater than width of the second adhesive layer. The width of the first adhesive layer closer to the metal strip being greater than the width of the second adhesive layer is conducive to alleviating stress concentration at the interface between the metal strip and tab adhesive of the tab during mechanical vibrations such as dropping, thereby alleviating the fracture of the tab.

According to some embodiments of this application, length of the first adhesive layer is greater than length of the second adhesive layer. The length of the first adhesive layer closer to the metal strip being greater than the length of the second adhesive layer is conducive to alleviating stress concentration at the interface between the metal strip and tab adhesive of the tab during mechanical vibrations such as dropping of the electrode assembly, thereby alleviating the fracture of the tab.

According to some embodiments of this application, the length of the first adhesive layer ranges from 4 mm to 8 mm, for example, 4.0 mm, 4.2 mm, 4.5 mm, 4.8 mm, 5.0 mm, 5.3 mm, 5.5 mm, 5.8 mm, 6.0 mm, 6.5 mm, 7.0 mm, 7.5 mm, or 8 mm.

According to some embodiments of this application, the length of the second adhesive layer ranges from 4 mm to 8 mm, for example, 4.0 mm, 4.2 mm, 4.5 mm, 4.8 mm, 5.0 mm, 5.3 mm, 5.5 mm, 5.8 mm, 6.0 mm, 6.5 mm, 7.0 mm, 7.5 mm, or 8 mm.

According to some embodiments of this application, the width of the first adhesive layer ranges from 3.5 mm to 8 mm. In some embodiments, the width of the first adhesive layer is 3.5 mm, 3.8 mm, 4.0 mm, 4.2 mm, 4.5 mm, 4.8 mm, 5.0 mm, 5.3 mm, 5.5 mm, 5.8 mm, 6.0 mm, 6.5 mm, 7.0 mm, 7.5 mm, or 8 mm, or within a range defined by any two of these values. According to some embodiments of this application, the width of the second adhesive layer ranges from 2.5 mm to 7 mm. In some embodiments, the width of the second adhesive layer is 2.5 mm, 2.8 mm, 3.0 mm, 3.5 mm, 3.8 mm, 4.0 mm, 4.2 mm, 4.5 mm, 4.8 mm, 5.0 mm, 5.3 mm, 5.5 mm, 5.8 mm, 6.0 mm, 6.5 mm, or 7.0 mm, or within a range defined by any two of these values. When width of the tab adhesive is excessively small, the packaging reliability of the tab cannot be guaranteed. Decreased width of the tab adhesive leads to decreased adhesion area between the tab adhesive and an outer packaging bag. When the adhesion area is excessively small, an adhesion force between the tab adhesive and the outer packaging bag is smaller than an external pulling force, resulting in adhesion failure of the tab. When the width of the tab adhesive increases, stress at an edge of the tab adhesive increases, so that stress applied to the metal strip increases, making the tab prone to fracture. In addition, excessively wide tab adhesive also leads to increased length of the tab, increased total length of the electrode assembly, and decreased volumetric energy density.

According to some embodiments of this application, thickness of the first adhesive layer is less than thickness of the second adhesive layer. The thickness of the first adhesive layer closer to the metal strip being greater than the thickness of the second adhesive layer is conducive to alleviating stress concentration at the interface between the metal strip and tab adhesive of the tab during mechanical vibrations such as dropping of the electrode assembly, thereby alleviating the fracture of the tab. According to some embodiments of this application, a difference between the thickness of the second adhesive layer and the thickness of the first adhesive layer is 5 $\mu$m to 50 $\mu$m. In some embodiments, the difference between the thickness of the second adhesive layer and the thickness of the first adhesive layer is 5 $\mu$m, 10 $\mu$m, 15 $\mu$m, 20 $\mu$m, 25 $\mu$m, 30 $\mu$m, 35 $\mu$m, 40 $\mu$m, 45 $\mu$m, or 50 $\mu$m, or within a range defined by any two of these values. According to some embodiments, the difference between the thickness of the second adhesive layer and the thickness of the first adhesive layer is 10 $\mu$m to 35 $\mu$m.

In this application, the thickness of the adhesive layer refers to a total thickness of adhesive layers on two sides of the metal strip.

According to some embodiments of this application, the thickness of the first adhesive layer is 10 $\mu$m to 55 $\mu$m. In some embodiments, the thickness of the first adhesive layer is 10 $\mu$m, 14 $\mu$m, 18 $\mu$m, 20 $\mu$m, 25 $\mu$m, 28 $\mu$m, 30 $\mu$m, 35 $\mu$m, 40 $\mu$m, 45 $\mu$m, 50 $\mu$m, or 55 $\mu$m, or within a range defined by any two of these values. When the thickness of the first adhesive layer is less than 10 $\mu$m, a buffering effect on a stress-strain difference between the second adhesive layer and the metal strip is limited, so the fracture of the tab cannot be significantly alleviated. When the thickness of the first adhesive layer is greater than 55 $\mu$m, and the thickness of the first adhesive layer is greater than the thickness of the second adhesive layer, excessive adhesive overflow occurs at a contact edge between the tab adhesive layer and the metal strip, leading to poor stress tolerance at the edge. Therefore, increased stress leads to cracks, making the tab prone to fracture.

According to some embodiments of this application, the thickness of the second adhesive layer is 20 $\mu$m to 100 $\mu$m. In some embodiments, the thickness of the second adhesive layer is 20 $\mu$m, 25 $\mu$m, 28 $\mu$m, 30 $\mu$m, 35 $\mu$m, 40 $\mu$m, 45 $\mu$m, 50 $\mu$m, 55 $\mu$m, 60 $\mu$m, 65 $\mu$m, 70 $\mu$m, 75 $\mu$m, 80 $\mu$m, 85 $\mu$m, 90 $\mu$m, 95 $\mu$m, or 100 $\mu$m, or within a range defined by any two of these values. The second adhesive layer is mainly used to form adhesion with the outer packaging bag. When the thickness of the second adhesive layer is less than 20 $\mu$m, the packaging reliability of the tab cannot be guaranteed. Under an external force, the second adhesive layer is easily pulled to fail in adhesion with the outer packaging bag, resulting in adhesion failure of the tab, thereby resulting in a dangerous accident of leakage of the electrode assembly. When the thickness of the second adhesive layer is greater than 100 $\mu$m, excessive adhesive overflow occurs on the second adhesive layer, and the adhesive overflow cannot be controlled only on the first adhesive layer. When the adhesive overflow from the second adhesive layer falls onto the metal strip, a hardness difference between the second adhesive layer and the metal strip leads to stress concentration at an interface therebetween, thereby resulting in the fracture of the tab.

According to some embodiments of this application, elongation at break of the first adhesive layer is greater than elongation at break of the second adhesive layer. The elongation at break of the first adhesive layer closer to the metal strip being greater than the elongation at break of the second adhesive layer is conducive to alleviating stress concentration at the interface between the metal strip and tab adhesive of the tab during mechanical vibrations such as dropping of the electrode assembly, thereby alleviating the fracture of the tab. According to some embodiments of this application, a difference between the elongation at break of the first adhesive layer and the elongation at break of the second adhesive layer is 50% to 650%. In some embodiments, the difference between the elongation at break of the first adhesive layer and the elongation at break of the second adhesive layer is 100%, 120%, 200%, 300%, 400%, or 500%, or within a range defined by any two of these values. In some embodiments, the difference between the elongation at break of the first adhesive layer and the elongation at break of the second adhesive layer is 100% to 500%.

According to some embodiments of this application, the elongation at break of the first adhesive layer is greater than or equal to 300%. In some embodiments, the elongation at break of the first adhesive layer is 350%, 400%, 450%, 500%, 550%, 600%, 650%, 700%, 750%, or 800%, or within a range defined by any two of these values. According to some embodiments of this application, the elongation at break of the first adhesive layer is 300% to 800%.

According to some embodiments of this application, the elongation at break of the second adhesive layer is greater than or equal to 140%. In some embodiments, the elongation at break of the second adhesive layer is 140%, 160%, 200%, 250%, 300%, 330%, 350%, 400%, 430%, 450%, 500%, 600%, 630%, 650%, or 750%, or within a range defined by any two of these values. According to some embodiments of this application, the elongation at break of the second adhesive layer is 300% to 650%.

According to some embodiments of this application, the elongation at break of the first adhesive layer $\varepsilon 1$, the elongation at break of the second adhesive layer is $\varepsilon 2$, $\varepsilon 1$ is greater than $\varepsilon 2$, particularly $0.19\% \leq (\varepsilon 1 - \varepsilon 2)/\varepsilon 2 \leq 4.30\%$, and preferably $0.34\% \leq (\varepsilon 1 - \varepsilon 2)/\varepsilon 2 \leq 1.14\%$.

According to some embodiments of this application, the first adhesive layer includes polyethylene. According to some embodiments of this application, the second adhesive layer includes polypropylene. According to some embodiments of this application, the first adhesive layer further includes polypropylene, and a mass percentage of polypropylene in the first adhesive layer is not greater than 80%. According to some embodiments of this application, the second adhesive layer further includes polyethylene, and a mass percentage of polyethylene in the second adhesive layer is not greater than 90%.

According to some embodiments of this application, a third adhesive layer is provided on the second adhesive layer. According to some embodiments of this application, a projection area of the third adhesive layer in the thickness direction of the tab is smaller than the projection area of the second adhesive layer in the thickness direction of the tab. According to some embodiments, the thickness of the third adhesive layer is less than the thickness of the second adhesive layer. According to some embodiments, the elongation at break of the third adhesive layer is less than the elongation at break of the second adhesive layer.

In this application, one object being greater than another object means that the object is greater than the another object, and a difference therebetween is greater than 5%. Similarly, in this application, one object being less than another object means that the object is less than the another object, and a difference therebetween is greater than 5%. A difference between two objects refers to a value obtained by dividing a difference between a larger object and a smaller object of the two objects by the smaller object.

According to some embodiments of this application, the electrode plate includes a positive electrode plate and a negative electrode plate.

The positive electrode plate may include a positive electrode current collector and a positive electrode active substance layer. In some embodiments, the positive electrode current collector may include but is not limited to aluminum. In some embodiments, the positive electrode active substance layer includes a positive electrode active substance, where the positive electrode active substance includes but is not limited to lithium cobalt oxide ($LiCoO_2$), lithium nickel cobalt manganese (NCM) ternary material, lithium iron phosphate ($LiFePO_4$), or lithium manganate ($LiMn_2O_4$). In some embodiments, the positive electrode active substance layer further includes a binder, and optionally includes a conductive material. The binder enhances binding between particles of the positive electrode active substance and also enhances binding between the positive electrode active substance and the current collector. In some embodiments, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, or the like. In some embodiments, the conductive material includes but is not limited to a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative. The positive electrode can be prepared using a well-known preparation method in the art. For example, the positive electrode can be obtained using the following method: mixing an active material, the conductive material, and the binder in a solvent to prepare an active material composition, and applying the active material composition on the current collector. In some embodiments, the solvent may include but is not limited to N-methylpyrrolidone.

The negative electrode plate may include a negative electrode current collector and a negative electrode active substance layer. According to some embodiments of this application, the negative electrode active substance layer includes a negative electrode active substance, where the negative electrode active substance may include a material for reversible intercalation or deintercalation of lithium ions, lithium metal, lithium metal alloy, a material capable of doping or dedoping lithium, or a transition metal oxide, for example, a material such as Si or $SiO_x$ ($0 < x < 2$). The material for reversible intercalation or deintercalation of lithium ions may be a carbon material. The carbon material may be any carbon-based negative electrode active substance commonly used in a lithium-ion rechargeable electrochemical apparatus. Examples of the carbon material include crystalline carbon, amorphous carbon, and combinations thereof. The crystalline carbon may be amorphous or plate-shaped, flake-shaped, spherical or fiber-shaped natural graphite or artificial graphite. The amorphous carbon may be soft carbon, hard carbon, a mesophase pitch carbonization product, burnt coke, or the like. Both low crystalline carbon and high crystalline carbon can be used as the carbon material. The low crystalline carbon material may typically include soft carbon and hard carbon. The high crystalline carbon material may typically include natural graphite, crystalline graphite, pyrolytic carbon, mesophase pitch-based carbon fiber, mesophase carbon microbeads, mesophase pitch, and high-temperature calcined carbon (such as petroleum or coke derived from coal tar pitch).

According to some embodiments of this application, the negative electrode active substance layer includes a binder, where the binder may include various binder polymers, for example, a difluoroethylene-hexafluoropropylene copolymer (PVDF-co-HFP), polyvinylidene fluoride, polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyethylene, polypropylene, styrene-butadiene rubber, acrylated styrene-butadiene rubber, epoxy resin, and nylon, but is not limited thereto.

According to some embodiments of this application, the negative electrode active substance layer further includes a conductive material to improve electrode conductivity. Any conductive material causing no chemical change can be used as the conductive material. Examples of the conductive material include: a carbon-based material such as natural graphite, artificial graphite, carbon black, acetylene black, Ketjen black, or carbon fiber; a metal-based material such as metal powder or metal fiber including copper, nickel, aluminum, or silver; a conductive polymer such as a polyphenylene derivative; or any mixture thereof. The current collector may be copper foil, nickel foil, stainless steel foil, titanium foil, nickel foam, copper foam, a polymer substrate coated with a conductive metal, or a combination thereof. The negative electrode current collector in this application may be selected from copper foil, nickel foil, stainless steel foil, titanium foil, nickel foam, copper foam, a polymer substrate coated with a conductive metal, and a combination thereof.

According to some embodiments of this application, the electrode assembly further includes a separator. The separator is not particularly limited to any material or shape, and may be based on any technology disclosed in the prior art. In some embodiments, the separator includes a polymer or an inorganic substance formed by a material stable to an electrolyte of this application.

For example, the separator may include a substrate layer and a surface treatment layer. The substrate layer is a non-woven fabric, film, or composite film having a porous structure, and a material of the substrate layer is selected from at least one of polyethylene, polypropylene, polyethylene terephthalate, or polyimide. Specifically, a polypropylene porous film, a polyethylene porous film, a polypropylene non-woven fabric, a polyethylene non-woven fabric, or a polypropylene-polyethylene-polypropylene porous composite film may be selected.

The surface treatment layer is provided on at least one surface of the substrate layer, and the surface treatment layer may be a polymer layer or an inorganic substance layer, or may be a layer formed by mixing a polymer and an inorganic substance.

The inorganic substance layer includes inorganic particles and a binder. The inorganic particles are selected from at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene.

The polymer layer includes a polymer, and a material of the polymer is selected from at least one of polyamide, polyacrylonitrile, acrylate polymer, polyacrylic acid, polyacrylate, polyvinylpyrrolidone, polyvinyl ether, polyvinylidene fluoride, and poly (vinylidene fluoride-hexafluoropropylene).

## Electrochemical apparatus

According to a second aspect, this application provides an electrochemical apparatus including the electrode assembly according to the first aspect of this application.

The electrochemical apparatus of this application further includes an electrolyte. The electrolyte includes a lithium salt and a non-aqueous solvent.

In some embodiments of this application, the lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. For example, $LiPF_6$ may be selected as the lithium salt because it can provide high ionic conductivity and improve cycling performance.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is dimethyl carbonate (DMC), diethyl carbonate (DEC), dipropyl carbonate (DPC), methyl propyl carbonate (MPC), ethylene propyl carbonate (EPC), methyl ethyl carbonate (MEC), or a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

According to some embodiments of this application, the electrochemical apparatus of this application includes but is not limited to all types of primary batteries, secondary batteries, fuel batteries, solar batteries, or capacitors. In some embodiments, the electrochemical apparatus is a lithium secondary battery or a sodium secondary battery. In some embodiments, the lithium secondary battery includes but is not limited to a lithium metal secondary battery, a lithium-ion secondary battery, a lithium polymer secondary battery, or a lithium-ion polymer secondary battery.

## Electronic apparatus

The electronic apparatus of this application may be any apparatus using the electrochemical apparatus according to the second aspect of this application.

In some embodiments, the electronic apparatus includes but is not limited to a notebook computer, a pen-input computer, a mobile computer, an e-book player, a portable phone, a portable fax machine, a portable copier, a portable printer, a head-mounted stereo headset, a video recorder, a liquid crystal display television, a portable cleaner, a portable CD player, a mini disc, a transceiver, an electronic notebook, a calculator, a storage card, a portable recorder,a radio, a backup power supply, a motor, an automobile, a motorcycle, a motor bicycle, a bicycle, a lighting apparatus, a toy, a game console, a clock, an electric tool, a flashlight, a camera, a large household storage battery, or a lithium-ion capacitor.

To achieve the foregoing objectives and enable persons skilled in the art to understand the solution of this application, the specific embodiments of this application are provided as examples. It should be noted that the described embodiments are some but not all embodiments of this application.

**I. Test method**

1. Test for elongation at break ε

An adhesive film with a fixed thickness of 80 $\mu$m is prepared and punched into a test specimen with a width of 25 mm and a length of 130 mm using a punching machine. The test specimen is fixed to test clamps of a Gotech tensile machine to test tensile strength of a substrate. A tensile speed is 10 mm/min, and a standard distance between two clamps of the tensile machine is 100 mm. Tensile strength and a displacement curve are recorded. A displacement point $L_{fracture}$ when the test specimen is fractured is considered as a fracture displacement point, and the elongation at break $\varepsilon = L_{fracture}/100 \times 100\%$.

2. Drop test for battery cell

(1) Battery cells with different tab adhesives are placed into a suitable drop clamp and dropped from a position at a height of 1.8 meters to a surface of a steel plate.
(2) The drop sequence for the battery cell test is as follows: first, the upper part of the battery cell faces downward, followed by the lower, upper-right, lower-right, upper-left, and lower-left parts. This sequence constitutes one round, and the test includes a total of 15 such rounds.
(3) The battery cell is disassembled, and after the battery cell has been dropped for 15 rounds, statistics on whether fracture of a tab or adhesion failure between the tab and a packaging bag occurs are collected. If there is no fracture of the tab, the battery cell is considered to have passed the tab fracture test; and if there is no adhesion failure of the tab, the battery cell is considered to have passed the tab adhesion failure test.

**II. Examples and comparative examples**

**Example 1**

Preparation of tab adhesive: The tab adhesive could be classified into single-layer tab adhesive and multi-layer tab adhesive. The multi-layer tab adhesive was formed by multiple layers of adhesive sheets, where an adhesive sheet closer to a surface of a metal strip was a first adhesive layer, and an adhesive sheet on a surface of the first adhesive layer was a second adhesive layer. By analogy, an adhesive sheet on a surface of the second adhesive layer was a third adhesive layer. A main material of each adhesive layer was polyethylene resin PE, polypropylene resin PP, or a mixture thereof. A percentage of PE in the main material was adjusted to change elongation at break of the adhesive sheet.

After mixed to uniformity, raw materials were poured into an extruder and formed into adhesive sheets through casting and extrusion. Thicknesses of the adhesive sheets were controlled using a measuring pump, and multiple layers of adhesive sheets were co-extruded and laminated using a distributor to form a multi-layer adhesive sheet structure.

In this example, the tab structure was shown in FIG. 8, where a single-layer tab adhesive was provided on one side of the metal strip, and a double-layer tab adhesive was provided on the other side of the metal strip. The single-layer tab adhesive was formed by the first adhesive layer, and the double-layer tab adhesive was formed by the first adhesive layer and the second adhesive layer. The single-layer tab adhesive was formed from a main material PE with a mass percentage of 100%, and had an elongation at break of 750%, a thickness of 70 $\mu$m, and a width of 5 mm. The first adhesive layer of the double-layer tab adhesive was formed from a main material PE with a mass percentage of 100%, and had an elongation at break of 750%, a thickness T1 of 20 $\mu$m, and a width W1 of 5 mm. The second adhesive layer was formed from PP with a mass percentage of 100% (PE with a mass percentage of 0%), and had an elongation at break of 140%, a thickness T2 of 50 $\mu$m, and a width W2 of 4 mm.

Preparation of tab: The foregoing tab adhesive was adhered to a preheated aluminum metal strip and copper metal strip. Then the tab adhesive was welded to the metal strips using a high-frequency welding machine, followed by cooling and slitting to form a positive electrode tab and a negative electrode tab respectively.

Preparation of battery cell: The foregoing positive and negative electrode tabs were welded to positive and negative electrode plates respectively. Then the positive electrode plate, a separator, and the negative electrode plate were stacked in sequence, so that the separator was sandwiched between the positive electrode plate and the negative electrode plate for separation. Then winding was performed to obtain an electrode assembly. Then the electrode assembly was placed into an aluminum-plastic film packaging shell. The tab adhesive exposed at a position of 0.5 mm from a top seal edge of an aluminum-plastic film. Then hot pressing was performed to tightly adhere the aluminum-plastic film and the tabs so as to seal the top of the battery cell with the aluminum-plastic film and implement insulation between the metal strip and the aluminum-plastic film. Ultimately, the foregoing apparatus was dried, then an electrolyte was injected, and processes such as vacuum packaging, standing, formation, degassing, and trimming were performed to obtain a finished battery cell.

**Examples 2 to 13**

Referring to example 1, structure and parameter changes were shown in Table 1.

Comparative examples 1 to 11

Referring to example 1, structure and parameter changes were shown in Table 1.

III. Test results

For test results of examples and comparative examples, refer to Table 2.
A1 represents projection area of the first adhesive layer along the thickness direction of the tab; A2 represents projection area of the second adhesive layer along the thickness direction of the tab; and A3 represents projection area of the third adhesive layer along the thickness direction of the tab.
L1 represents length of the first adhesive layer; L2 represents length of the second adhesive layer; and L3 represents length of the third adhesive layer.
T1 represents thickness of the first adhesive layer; T2 represents thickness of the second adhesive layer; and T3 represents thickness of the third adhesive layer.
W1 represents width of the first adhesive layer; W2 represents width of the second adhesive layer; and W3 represents width of the third adhesive layer.
$\varepsilon 1$ represents elongation at break of the first adhesive layer; $\varepsilon 2$ represents elongation at break of the second adhesive layer; and $\varepsilon 3$ represents elongation at break of the third adhesive layer.
P indicates pass.

$$\text{Mass percentage of PE} = \text{mass of PE}/(\text{mass of PE} + \text{mass of PP}) \times 100\%.$$

**Table 1**

| Group | (A1-A2)/A2 | T1 (μm) | T2 (μm) | T3 (μm) | W1 (mm) | W2 (mm) | W3 (mm) | Mass percentage of PE in first adhesive layer | Mass percentage of PE in second adhesive layer | Mass percentage of PE in third adhesive layer | ε1 | ε2 | ε3 |
|---|---|---|---|---|---|---|---|---|---|---|---|---|---|
| Example 1 | 16 | 20 | 50 | / | 5 | 4 | / | 100% | 0% | / | 750% | 140% | / |
| Example 2 | 16 | 20 | 50 | / | 5 | 4 | / | 100% | 0% | / | 750% | 140% | / |
| Example 3 | 16 | 20 | 35 | 45 | 5.5 | 4.5 | 4 | 100% | 50% | 0% | 750% | 430% | 140% |
| Example 4 | 22 | 10 | 50 | / | 5 | 4 | / | 100% | 0% | / | 750% | 140% | / |
| Example 5 | 22 | 20 | 50 | / | 5 | 4 | / | 100% | 0% | / | 750% | 140% | / |
| Example 6 | 22 | 55 | 60 | / | 5 | 4 | / | 100% | 0% | / | 750% | 140% | / |
| Example 7 | 30 | 20 | 20 | / | 5 | 4 | / | 100% | 0% | / | 750% | 140% | / |
| Example 8 | 30 | 20 | 100 | / | 5 | 4 | / | 100% | 0% | / | 750% | 140% | / |
| Example 9 | 38 | 20 | 50 | / | 8 | 7 | / | 100% | 0% | / | 750% | 140% | / |
| Example 10 | 38 | 20 | 50 | / | 3.5 | 2.5 | / | 100% | 0% | / | 750% | 140% | / |
| Example 11 | 38 | 20 | 50 | / | 5 | 4 | / | 100% | 90% | / | 750% | 630% | / |
| Example 12 | 38 | 20 | 50 | / | 5 | 4 | / | 80% | 50% | / | 580% | 430% | / |
| Example 13 | 38 | 20 | 50 | / | 5 | 4 | / | 20% | 0% | / | 300% | 140% | / |
| Example 14 | 50 | 20 | 50 | / | 5 | 4 | / | 100% | 90% | / | 750% | 630% | |
| Example 15 | 30 | 20 | 50 | / | 5 | 4 | / | 80% | 50% | / | 580% | 430% | / |
| Comparative example 1 | / | 80 | / | / | 5 | / | / | 0% | / | / | 140% | / | / |
| Comparative example 2 | / | 100 | / | / | 5.5 | / | / | 0% | / | / | 140% | / | / |
| Comparative example 3 | 22 | 8 | 50 | / | 5 | 4 | / | 100% | 0% | / | 750% | 140% | / |
| Comparative example 4 | 22 | 57 | 50 | / | 5 | 4 | / | 100% | 0% | / | 750% | 140% | / |
| Comparative example 5 | 30 | 20 | 18 | / | 5 | 4 | / | 100% | 0% | / | 750% | 140% | / |

| Group | (A1 -A2) /A2 | T1 (μm) | T2 (μm) | T3 (μm) | W1 (mm) | W2 (mm) | W3 (mm) | Mass percentage of PE in first adhesive layer | Mass percentage of PE in second adhesive layer | Mass percentage of PE in third adhesive layer | ε1 | ε2 | ε3 |
|---|---|---|---|---|---|---|---|---|---|---|---|---|---|
| Comparative example 6 | 30 | 20 | 103 | / | 5 | 4 | / | 100% | 0% | / | 750% | 140% | / |
| Comparative example 7 | 38 | 20 | 50 | / | 8.5 | 7.5 | / | 100% | 0% | / | 750% | 140% | / |
| Comparative example 8 | 38 | 20 | 50 | / | 4 | 2 | / | 100% | 0% | / | 750% | 140% | / |
| Comparative example 9 | 38 | 20 | 50 | / | 4 | 5 | / | 100% | 0% | / | 750% | 140% | / |
| Comparative example 10 | 38 | 20 | 50 | / | 5 | 4 | / | 18% | 0% | / | 250% | 140% | / |
| Comparative example 11 | 38 | 20 | 50 | / | 5 | 4 | / | 20% | 100% | / | 300% | 750% | / |
| Comparative example 12 | 4 | 20 | 50 | / | 5 | 4 | / | 100% | 90% | / | 750% | 630% | / |
| Comparative example 13 | 60 | 20 | 50 | / | 5 | 4 | / | 100% | 90% | / | 750% | 630% | / |

EP 4 318 786 A1

13

**Table 2**

| Group | Drop effect-tab fracture | Drop effect-tab adhesion failure |
|---|---|---|
| Example 1 | 4/10P | 10/10P |
| Example 2 | 5/10P | 10/10P |
| Example 3 | 7/10P | 10/10P |
| Example 4 | 8/10P | 10/10P |
| Example 5 | 6/10P | 10/10P |
| Example 6 | 5/10P | 10/10P |
| Example 7 | 8/10P | 7/10P |
| Example 8 | 6/10P | 10/10P |
| Example 9 | 6/10P | 10/10P |
| Example 10 | 7/10P | 7/10P |
| Example 11 | 10/10P | 10/10P |
| Example 12 | 9/10P | 10/10P |
| Example 13 | 5/10P | 10/10P |
| Example 14 | 9/10P | 9/10P |
| Example 15 | 10/10P | 10/10P |
| Comparative example 1 | 1/10P | 10/10P |
| Comparative example 2 | 0/10P | 10/10P |
| Comparative example 3 | 3/10P | 10/10P |
| Comparative example 4 | 2/10P | 10/10P |
| Comparative example 5 | 4/10P | 4/10P |
| Comparative example 6 | 1/10P | 10/10P |
| Comparative example 7 | 4/10P | 10/10P |
| Comparative example 8 | 7/10P | 3/10P |
| Comparative example 9 | 4/10P | 10/10P |
| Comparative example 10 | 2/10P | 10/10P |
| Comparative example 11 | 4/10P | 10/10P |
| Comparative example 12 | 4/10P | 10/10P |
| Comparative example 13 | 7/10P | 4/10P |

In comparative example 1, both upper and lower sides of the metal strip with the tab adhesive were single-layer structures (as shown in FIG. 7). The adhesive layer had a thickness of 80 $\mu$m and a width of 5 mm, was formed from 100% of PP, and was a hard adhesive layer with an elongation at break of just 140%.

The tab adhesive of the metal strip in comparative example 2 had the same structure as that in comparative example 1, except that the thickness of the adhesive layer was increased to 100 $\mu$m.

The tab adhesive on one side of the metal strip in example 1 was the same as that in comparative examples (as shown in FIG. 8), and the tab adhesive on the other side of the metal strip had a double-layer structure. The first adhesive layer was closer to the metal strip, followed by the second adhesive layer. The first adhesive layer had a thickness T1 of 20 $\mu$m and a width W1 of 5 mm, was formed from 100% of PE, and was a soft adhesive layer with an elongation at break of 750%. The second adhesive layer had a thickness T2 of 50 $\mu$m and a width W2 of 4 mm, was formed from 100% of PP, and was a hard adhesive layer with an elongation at break of 140%.

In example 2, a double-layer tab adhesive was provided on both sides of the metal strip (as shown in FIG. 9).

The double-layer tab adhesive had the same related physical properties as the double-layer tab adhesive in example 1.

In example 3, a three-layer tab adhesive was provided on both sides of the metal strip (as shown in FIG. 10). The first adhesive layer was closer to the metal strip, followed by the second adhesive layer, and the outermost layer was the third adhesive layer. The first adhesive layer had a thickness T1 of 20 $\mu$m and a width W1 of 5.5 mm, was formed from 100% of PE, and was a soft adhesive layer with an elongation at break of 750%. The second adhesive layer had a thickness T2 of 35 $\mu$m and a width W2 of 4.5 mm, was formed from 50% of PE and 50% of PP, and was a soft adhesive layer with an elongation at break of 430%. The third adhesive layer had a thickness T3 of 45 $\mu$m and a width W3 of 4 mm, was formed from 100% of PP, and was a hard adhesive layer with an elongation at break of 140%.

From comparison between the drop results of comparative example 1 and examples 1 and 2 or comparison between the drop results of comparative examples 2 and 3, it can be learned that the structure and performance of the tab adhesive are optimized in this application to significantly improve the tab fracture pass rate in the drop test, and that the optimized tab adhesive being applied to both sides of the metal strip can improve the drop pass rate more than the optimized tab adhesive being applied to only one side of the metal strip. Because a conventional tab adhesive is harder than the metal strip, when subjected to an external force, they undergo different deformations and thus pull each other, leading to stress concentration, especially at a contact edge between the tab adhesive and the metal strip, thereby resulting in cracks and fracture of the metal strip. Therefore, the first adhesive layer using a soft adhesive layer with high elongation can increase deformation of the tab adhesive under stress, reduce stress concentration, and alleviate deformation of the metal strip under stress, thereby improving the drop pass rate and the tab fracture pass rate.

Preparation methods in examples 4 to 6 and comparative examples 3 and 4 were substantially the same as that in example 2, except the following: in example 4, the thickness T1 of the first adhesive layer was 10 $\mu$m; in example 5, the thickness T1 of the first adhesive layer was 20 $\mu$m; in example 6, the thickness T1 of the first adhesive layer was 55 $\mu$m, and the thickness T2 of the second adhesive layer was 60 $\mu$m; in comparative example 3, the thickness T1 of the first adhesive layer was 8 $\mu$m ; and in comparative example 4, the thickness T1 of the first adhesive layer was 57 $\mu$m.

From comparison between the drop results of examples 4 to 6 and comparative examples 3 and 4, it can be learned that the thickness T1 of the first adhesive layer should be limited to 10 $\mu$m-55 $\mu$m, and T1 < T2. When T1 is less than 10 $\mu$m, the first (soft) adhesive layer is excessively thin and provides a limited buffering effect on a stress-strain difference between the second (hard) adhesive layer and the metal strip, so the fracture of the tab cannot be significantly alleviated. When T1 is greater than 55 $\mu$m, T1 > T2, and excessive adhesive overflow occurs at a contact edge between the tab adhesive layer and the metal strip, leading to poorer stress tolerance at the edge. Therefore, increased stress leads to cracks, making the tab prone to fracture.

Preparation methods in examples 7 and 8 and comparative examples 5 and 6 were substantially the same as that in example 2, except the following: in example 7, the thickness T2 of the second adhesive layer was 20 $\mu$m; in example 8, the thickness T2 of the second adhesive layer was 100 $\mu$m; in example 5, the thickness T2 of the second adhesive layer was 18 $\mu$m; and in comparative example 6, the thickness T2 of the second adhesive layer was 103 $\mu$m.

From comparison between the drop results of examples 7 and 8 and comparative examples 5 and 6, it can be learned that the thickness T2 of the second adhesive layer should be limited to 20 $\mu$m-100 $\mu$m. The second adhesive layer is mainly used to form adhesion with an outer packaging bag. When T2 of the second adhesive layer is less than 20 $\mu$m, the packaging reliability of the tab cannot be guaranteed. Under an external force, the second adhesive layer is easily pulled to fail in adhesion with the outer packaging bag, resulting in adhesion failure of the tab, thereby resulting in a dangerous accident of leakage of the electrode assembly. When T2 of the second adhesive layer is greater than 100 $\mu$m, excessive adhesive overflow occurs on the second adhesive layer. Even if W1 > W2, the adhesive overflow cannot be controlled only on the first adhesive layer. When the adhesive overflow from the second hard adhesive layer falls onto the metal strip, a hardness difference between the second hard adhesive layer and the metal strip leads to stress concentration at an interface therebetween, thereby resulting in the fracture of the tab.

Preparation methods in examples 9 and 10 and comparative examples 7 to 9 were substantially the same as that in example 2, except the following: in example 9, the width W1 of the first adhesive layer was 8 mm, and the width W2 of the second adhesive layer was 7 mm; in example 10, the width W1 of the first adhesive layer was 3.5 mm, and the width W2 of the second adhesive layer was 2.5 mm; in comparative example 7, the width W1 of the first adhesive layer was 8.5 mm, and the width W2 of the second adhesive layer was 7.5 mm; in comparative example 8, the width W1 of the first adhesive layer was 4 mm, and the width W2 of the second adhesive layer was 2 mm; and in comparative example 7, the width W 1 of the first adhesive layer was 4 mm, and the width W2 of the second adhesive layer was 5 mm.

From comparison between the drop results of examples 9 and 10 and comparative examples 7 to 9, it can be learned that the width W1 of the first adhesive layer should be limited to 3.5 mm-8 mm, the width W2 of the second adhesive layer should be limited to 2.5 mm-7 mm, and W1 > W2. When width of the tab adhesive is excessively small, the packaging reliability of the tab cannot be guaranteed. Decreased width of the tab adhesive leads to decreased adhesion area between the tab adhesive and an outer packaging bag. When the adhesion area is excessively small, an adhesion force between the tab adhesive and the outer packaging bag is smaller than an external pulling force, resulting in adhesion failure of the tab. When the width of the tab adhesive increases, stress at an edge of the tab adhesive increases, so that stress applied to the metal strip increases, making the tab prone to fracture. In addition, excessively wide tab adhesive leads to increased length of the tab, increased total length of the battery cell, and decreased volumetric energy density. Only when W1 > W2, the adhesive overflow from the second adhesive layer does not exceed the first adhesive layer, as shown in FIG. 6. If W1 < W2, the adhesive overflow from the second adhesive layer inevitably falls onto the metal strip, and the hardness difference between the hard adhesive and the metal strip increases the stress concentration at the interface between the adhesive and the metal strip, thereby resulting in the fracture of the tab.

Preparation methods in examples 11 to 13 and comparative examples 10 and 11 were substantially the same as that in example 2, except the following: in example 11, the second adhesive layer was formed from 90% of PE and 10% of PP and had an elongation at break of 630%; in example 12, the first adhesive layer was formed from 80% of PE and 20% of PP and had an elongation at break of 580%, and the second adhesive layer was formed from 50% of PE and 50% of PP and had an elongation at break of 430%; in example 13, the first adhesive layer was formed from 20% of PE and 80% of PP and had an elongation at break of 300%; in comparative example 10, the first adhesive layer was formed from 18% of PE and 82% of PP and had an elongation at break of 250%; and in comparative example 11, the first adhesive layer was formed from 20% of PE and 80% of PP and had an elongation at break of 300%, and the second adhesive layer was formed from 100% of PE and had an elongation at break of 750%.

From comparison between the drop results of examples 11 to 13 and comparative examples 10 and 11, it can be learned that in the first adhesive layer, a mass percentage of PE is 20%-100%, and a mass percentage of PP is 0%-80%; in the second adhesive layer, a mass percentage of PE is 0%-90%, and a mass percentage of PP is 10%-100%; and the elongation at break of the first adhesive layer is $\varepsilon 1$, $\varepsilon 1$ is greater than or equal to 300%, and the elongation at break of the second adhesive layer is $\varepsilon 2$, $\varepsilon 1$ is greater than or equal to $\varepsilon 2$. Higher percentage of PE in an adhesive layer leads to softer adhesive layer and higher elongation at break. When the percentage of PE in the first adhesive layer is less than 20%, that is, the elongation at break is less than 300%, the first adhesive layer is not soft enough, leading to a strain difference with the metal strip, stress concentration at an interface between the adhesive layer and the metal strip, and the fracture of the tab, and therefore allowing no significant improvement in drop performance. In addition, when $\varepsilon 1 < \varepsilon 2$, even if the softness of the second adhesive layer increases, the second adhesive layer is not a layer in direct contact with the metal strip, and the stress at the interface between the tab adhesive and the metal strip is still induced by the first adhesive layer and the metal strip. Therefore, there is no improvement in drop performance and fracture of the tab.

From comparison between example 11 and comparative examples 12 and 13, it can be found that (A1 - A2)/A2 being less than 8% cannot ensure that the adhesive overflow from second adhesive layer does not exceed the first adhesive layer, which may cause the hardness difference between the hard adhesive and the metal strip to increase stress concentration at the interface between the adhesive and the metal strip, thereby resulting in an increased risk of the fracture of the tab. In addition, when (A1 - A2)/A2 is greater than 50%, the area of the second adhesive layer is excessively small, which may cause deterioration in the packaging reliability of the tab, for example, increased adhesion failure of the tab and a risk of leakage of the electrode assembly. Furthermore, from further comparison between examples 12 and 15 and examples 2 and 5, it can be found that when $22\% \le$ (A1 - A2)/A2 $\le 30\%$, the fracture of the tab can be further alleviated.

**Claims**

1. An electrode assembly, comprising an electrode plate and a tab disposed on the electrode plate; **characterized in that**, the tab comprises a metal strip and a tab adhesive provided on the metal strip; and along a thickness direction of the tab, the tab adhesive comprises a first adhesive layer provided on the metal strip and a second adhesive layer provided on the first adhesive layer, wherein a projection area of the first adhesive layer along the thickness direction of the tab is A1, a projection area of the second adhesive layer along the thickness direction of the tab is A2, A1 is greater than A2, and $8\% \le$ (A1 - A2)/A2 $\le 50\%$.

2. The electrode assembly according to claim 1, wherein $16\% \le$ (A1 - A2)/A2 $\le 38\%$.

3. The electrode assembly according to claim 2, wherein $22\% \le$ (A1 - A2)/A2 $\le 30\%$.

4. The electrode assembly according to any one of claims 1-3, wherein A1 ranges from 14 mm$^2$ to 64 mm$^2$, and A2 ranges from 10 mm$^2$ to 56 mm$^2$.

5. The electrode assembly according to any one of claims 1-4, wherein a thickness of the second adhesive layer ranges from 20 $\mu$m to 100 $\mu$m.

6. The electrode assembly according to claim 5, wherein the thickness of the second adhesive layer ranges from 40 $\mu$m to 80 $\mu$m.

7. The electrode assembly according to any one of claims 1-6, wherein an elongation at break of the first adhesive layer is $\varepsilon 1$, an elongation at break of the second adhesive layer is $\varepsilon 2$, $\varepsilon 1$ is greater than $\varepsilon 2$, and 0.19% $\leq (\varepsilon 1 - E2)/E2 \leq$ 4.30%.

8. The electrode assembly according to claim 7, 0.34% $\leq (\varepsilon 1 - \varepsilon 2)/\varepsilon 2 \leq$ 1.14%.

9. The electrode assembly according to claim 1, wherein the first adhesive layer comprises polyethylene;

10. The electrode assembly according to claim 1 or 9, the second adhesive layer comprises polypropylene.

11. An electrochemical apparatus, comprising the electrode assembly according to any one of claims 1 to 10.

Second adhesive layer

First adhesive layer

T2

T1

1A

Second adhesive layer

First adhesive layer

W2

W1

1B

Second adhesive layer

First adhesive layer

W2

W1

1C

FIG. 1

Second adhesive layer

First adhesive layer

T2

T1

2A

L1

L2

Second adhesive layer

First adhesive layer

W2

W1

2B

Second adhesive layer

First adhesive layer

2C

FIG. 2

Third adhesive layer

Second adhesive layer

First adhesive layer

3A

First adhesive layer

Second adhesive layer

Third adhesive layer

Second adhesive layer

First adhesive layer

3B

First adhesive layer

Third adhesive layer

Second adhesive layer

First adhesive layer

3C

Second adhesive layer

Third adhesive layer

Second adhesive layer

First adhesive layer

3D

Third adhesive layer

Second adhesive layer

First adhesive layer

3E

FIG. 3

Third adhesive layer

Second adhesive layer

First adhesive layer

T3

T2

T1

4A

Third adhesive layer

Second adhesive layer

First adhesive layer

4B

Third adhesive layer

Second adhesive layer

First adhesive layer

4C

Third adhesive layer

Second adhesive layer

First adhesive layer

4D

Third adhesive layer

Second adhesive layer

First adhesive layer

4E

FIG. 4

Third adhesive layer

Second adhesive layer

First adhesive layer

5A

Second adhesive layer

Third adhesive layer

Second adhesive layer

First adhesive layer

5B

Third adhesive layer

Second adhesive layer

First adhesive layer

5C

Second adhesive layer

Third adhesive layer

Second adhesive layer

First adhesive layer

5D

Third adhesive layer

Second adhesive layer

First adhesive layer

5E

FIG. 5

First adhesive layer

Second adhesive layer

Adhesive overflow

FIG. 6

First adhesive layer

Metal strip

First adhesive layer

FIG. 7

Second adhesive layer

First adhesive layer

Metal strip

First adhesive layer

FIG. 8

Second adhesive layer

First adhesive layer

Metal strip

First adhesive layer

Second adhesive layer

FIG. 9

FIG. 10

Europäisches Patentamt
European Patent Office
Office européen des brevets

# EUROPEAN SEARCH REPORT

Application Number

EP 23 18 8932

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 497 872 A (NINGDE NEW ENERGY SCIENCE AND TECH LIMITED COMPANY) 13 May 2022 (2022-05-13) * the whole document * | 1-11 | INV. H01M50/534 |
| E | & EP 4 220 826 A1 (NINGDE AMPEREX TECHNOLOGY LTD [CN]) 2 August 2023 (2023-08-02) * paragraph [0005] * * paragraph [0010] – paragraph [0015] * * paragraph [0017] – paragraph [0018] * * paragraph [0041] * * paragraph [0044] – paragraph [0045] * * paragraph [0053] * * paragraph [0064] – paragraph [0065] * * paragraph [0073] * * figures 1, 9-12 * | 1-11 | |
| X | CN 215 816 256 U (EVE ENERGY CO LTD; HUIZHOU EVE ENERGY CO LTD) 11 February 2022 (2022-02-11) * paragraph [0005] * * paragraph [0010] * * paragraph [0011] * * paragraph [0012] * * paragraph [0013] * * paragraph [0014] * * paragraph [0015] * * paragraph [0018] * * paragraph [0022] * * paragraph [0032] * * paragraph [0034] * * paragraph [0036] * * paragraph [0039] * | 1-11 | TECHNICAL FIELDS SEARCHED (IPC) H01M |

The present search report has been drawn up for all claims

| Place of search | Date of completion of the search | Examiner |
|---|---|---|
| Munich | 12 December 2023 | Möller, Claudia |

EPO FORM 1503 03.82 (P04C01)

## ANNEX TO THE EUROPEAN SEARCH REPORT
## ON EUROPEAN PATENT APPLICATION NO.

EP 23 18 8932

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2023

| Patent document cited in search report | | Publication date | Patent family member(s) | | Publication date |
|---|---|---|---|---|---|
| CN 114497872 | A | 13-05-2022 | CN | 114497872 A | 13-05-2022 |
| | | | EP | 4220826 A1 | 02-08-2023 |
| CN 215816256 | U | 11-02-2022 | NONE | | |

EPO FORM P0459

For more details about this annex : see Official Journal of the European Patent Office, No. 12/82